# EUROPÄISCHE PATENTSCHRIFT

(11) **EP 3 219 145 B1**
(45) Veröffentlichungstag und Bekanntmachung des Hinweises auf die Patenterteilung: **06.03.2019**
(21) Anmeldenummer: 15760199.8
(22) Anmeldetag: 10.09.2015
(51) Int. Cl.: H04W 28/08

(54) **PRÄDIKTIVE RESERVIERUNG VON FUNKZELLEN ZUR UNTERBRECHUNGSFREIEN KOMMUNIKATION MIT EINER DATEN-CLOUD**
PREDICTIVE RESERVATION OF RADIO CELLS FOR AN INTERRUPTION-FREE COMMUNICATION WITH A DATA CLOUD
RÉSERVATION PRÉDICTIVE DE CELLULES RADIO POUR LA COMMUNICATION SANS INTERRUPTION AVEC UNE CLOUD DE DONNÉES

(30) Priorität: 10.11.2014 DE 102014222840
(43) Veröffentlichungstag der Anmeldung: 20.09.2017
(73) Patentinhaber: Robert Bosch GmbH, 70442 Stuttgart (DE)
(72) Erfinder: ROUS, Martin, 74395 Mundelsheim (DE); HOFSAESS, Volker, 71696 Moeglingen (DE)
(86) Internationale Anmeldenummer: PCT/EP2015/070678
(87) Internationale Veröffentlichungsnummer: WO 2016/074820

(56) Entgegenhaltungen:
- GB-A- 2 387 295
- GB-A- 2 389 015
- GB-A- 2 439 432
- US-A1- 2006 245 394
- GUNWOO KIM ET AL: "A structured TDMA-based V2I MAC protocol for automated guided vehicle control systems", INFORMATION NETWORKING (ICOIN), 2012 INTERNATIONAL CONFERENCE ON, IEEE, 1. Februar 2012 (2012-02-01), Seiten 154-158, XP032127446, DOI: 10.1109/ICOIN.2012.6164368 ISBN: 978-1-4673-0251-7

## Beschreibung

Die Erfindung betrifft ein Verfahren zum Betreiben eines Endgeräts sowie ein Endgerät. Die Erfindung betrifft ferner ein Verfahren zum Betreiben eines Funkzellenverwaltungsservers sowie einen Funkzellenverwaltungsserver. Die Erfindung betrifft ferner ein Fahrzeug sowie ein Computerprogramm.

### Stand der Technik

Die Offenlegungsschrift GB 2 439 432 A offenbart ein Hand-Over-Verfahren für ein mobiles Endgerät.

Die Offenlegungsschrift US 2006/245394 A1 offenbart ein Hand-Off-Verfahren.

Die Offenlegungsschrift GB 2 389 015 A offenbart ein Verfahren zum Betreiben eines Endgeräts für ein Kommunikationsnetzwerk.

Für teil- und vollautomatisierte Fahrfunktionen sind in der Regel cloudbasierte Fahrfunktionen zwingend erforderlich. Beispiele sind aktuelle Reibwerte, Informationen zu temporären Gefahrenstellen und Straßenzuständen oder Witterungen, die für eine Interpretation und eine Bewertung eines Umfeldmodells entsprechend einem Umfeld des Fahrzeugs benötigt werden, bevor in eine Fahrdynamikregelung eingegriffen werden kann. Hierfür ist es in der Regel erforderlich, dass eine sichere und unterbrechungsfreie Kommunikation mit einer hohen Datenrate über ein Kommunikationsnetzwerk zwischen dem Fahrzeug und einem Server, der die vorstehend genannten Werte und Informationen Um zum Beispiel ein 5G-Mobilfunknetzwerk zu realisieren, braucht es in der Regel neue Funkstationen und mobile Endgeräte mit viel mehr MIMO-(Multiple Input Multiple Output)-Antennen, als heute verfügbare mobile Endgerät bereitstellt, sichergestellt ist. Für solche künftigen Anforderungen an Datenraten und Verfügbarkeit werden bekannte Mobilfunknetze ausgebaut, z.B. basierend auf dem Mobilfunkstandard 5G.

Um zum Beispiel ein 5G-Mobilfunknetzwerk zu realisieren, braucht es in der Regel neue Funkstationen und mobile Endgeräte mit viel mehr MIMO-(Multiple Input Multiple Output)-Antennen, als heute verfügbare mobile Endgeräte aufweisen, eine viel höhere geografische Dichte von Basisstationen mit viel kleineren Funkradien, sowie viel breitere Frequenzspektren in der Luft.

Kleinere Funkradien führen üblicherweise zu einem ständigen Wechseln der Funkzellen, insbesondere bei höheren Fahrgeschwindigkeiten des Fahrzeugs. Damit ist vermehrt mit Unterbrechungen der Datenverbindung und insbesondere einer Verlängerung der Antwortzeiten zu rechnen.

### Offenbarung der Erfindung

Die der Erfindung zugrunde liegende Aufgabe kann daher darin gesehen werden, ein Verfahren zum Betreiben eines Endgeräts für ein Kommunikationsnetzwerk bereitzustellen, welches die bekannten Nachteile überwindet und eine hohe Kommunikationsverfügbarkeit ermöglicht und Unterbrechungen in einer Datenverbindung möglichst vermeidet.

Die der Erfindung zugrunde liegende Aufgabe kann auch darin gesehen werden, ein entsprechendes Endgerät für ein Kommunikationsnetzwerk, ein Verfahren zum Betreiben eines Funkzellenverwaltungsservers, einen Funkzellenverwaltungsserver, ein Fahrzeug sowie ein Computerprogramm bereitzustellen.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Betreiben eines Endgeräts für ein Kommunikationsnetzwerk bereitgestellt, wobei das Endgerät basierend auf einer zukünftigen Route des Endgeräts eine Reservierungsanfrage zum Einbuchen in eine Funkzelle des Kommunikationsnetzwerks entlang der Route über das Kommunikationsnetzwerk an einen Funkzellenverwaltungsserver sendet, um sich dann abhängig von einer Antwort des Funkzellenverwaltungsservers in die angefragte Funkzelle einbuchen zu können, wobei die Reservierungsanfrage eine Zeit umfasst, wann sich das Endgerät in die Funkzelle einbuchen möchte.

Nach einem weiteren Aspekt wird ein Verfahren zum Betreiben eines Funkzellenverwaltungsservers für Funkzellen eines Kommunikationsnetzwerks bereitgestellt, wobei der Funkzellenverwaltungsserver über das Kommunikationsnetzwerk eine Reservierungsanfrage zum Einbuchen in eine Funkzelle von einem Endgerät empfängt, wobei der Funkzellenverwaltungsserver überprüft, ob entsprechend der Reservierungsanfrage ein Einbuchen in die Funkzelle möglich ist oder nicht, wobei der Funkzellenserver abhängig von der Prüfung eine entsprechende Antwort über das Kommunikationsnetzwerk an das Endgerät sendet, dass ein Einbuchen in die angefragte Funkzelle möglich oder nicht möglich ist, wobei die Antwort umfasst, für welchen Zeitraum die angefragte Funkzelle für das Endgerät zum Einbuchen reserviert ist.

Gemäß einem weiteren Aspekt wird ein Endgerät für ein Kommunikationsnetzwerk bereitgestellt, umfassend einen Prozessor, der ausgebildet ist, basierend auf einer zukünftigen Route des Endgeräts eine Reservierungsanfrage zum Einbuchen in eine Funkzelle des Kommunikationsnetzwerks entlang der Route zu ermitteln, und eine Kommunikationsschnittstelle, die ausgebildet ist, die Reservierungsanfrage an einen Funkzellenverwaltungsserver über das Kommunikationsnetzwerk zu senden, so dass sich das Endgerät abhängig von einer Antwort des Funkzellenverwaltungsservers in die angefragte Funkzelle einbuchen kann, wobei die Reservierungsanfrage eine Zeit umfasst, wann sich das Endgerät in die Funkzelle einbuchen möchte.

Nach noch einem Aspekt wird ein Funkzellenverwaltungsserver für Funkzellen eines Kommunikationsnetzwerks bereitgestellt, umfassend eine Kommunikationsschnittstelle, die ausgebildet ist, eine Reservierungsanfrage zum Einbuchen in eine Funkzelle über das Kommunikationsnetzwerk von einem Endgerät zu empfangen, und einen Prozessor, der ausgebildet ist, zu überprüfen, ob entsprechend der Reservierungsanfrage ein Einbuchen in die Funkzelle möglich ist oder nicht, wobei der Prozessor ferner ausgebildet ist, abhängig von der Prüfung eine entsprechende Antwort zu ermitteln, dass ein Einbuchen in die angefragte Funkzelle möglich oder nicht möglich ist, wobei die Kommunikationsschnittstelle ferner ausgebildet ist, die Antwort über das Kommunikationsnetzwerk an das Endgerät zu senden, wobei die Antwort umfasst, für welchen Zeitraum die angefragte Funkzelle für das Endgerät zum Einbuchen reserviert ist.

Nach noch einem Aspekt wird ein Fahrzeug bereitgestellt, welches das erfindungsgemäße Endgerät umfasst.

Nach noch einem Aspekt wird ein Computerprogramm bereitgestellt, welches Programmcode zur Durchführung des Verfahrens zum Betreiben eines Endgeräts für ein Kommunikationsnetzwerk und/oder zur Durchführung eines Verfahrens zum Betreiben eines Funkzellenverwaltungsservers für Funkzellen eines Kommunikationsnetzwerks umfasst, wenn das Computerprogramm auf einem Computer ausgeführt wird.

Die Erfindung umfasst also insbesondere den Gedanken, eine prädiktive Funkzellenreservierung entlang einer Route des Endgeräts, z.B. einer Fahrtroute des Fahrzeugs, durchzuführen. Die Funkzelle wird für das Endgerät reserviert. Es wird also eine Kapazität für das Endgerät bereitgehalten, beispielsweise eine Übertragungs- und/oder Datenkapazität. Denn in der Regel können sich nur eine begrenzte Anzahl an Teilnehmern oder Endgeräten in eine Funkzelle zur gleichen Zeit einbuchen. Durch die Reservierung wird sichergestellt, dass sich weitere Teilnehmer nicht mehr in die Funkzelle einbuchen können, wenn dadurch die maximale Anzahl an in der Funkzelle eingebuchten Teilnehmern überschritten würde, obwohl momentan noch Kapazitäten vorhanden wären. Denn diese Kapazitäten sind für das anfragende Endgerät reserviert worden. Dadurch wird in vorteilhafter Weise eine Verfügbarkeit betreffend einer Kommunikation sichergestellt.

Die Funkzelle der Reservierungsanfrage ist eine Funkzelle, in die sich das Endgerät zukünftig einbuchen will. Dies deshalb, weil sich diese Funkzelle entlang der zukünftigen Route des Endgeräts befindet. Für die Reservierungsanfrage befindet sich das Endgerät in einer Funkzelle, welche sich vor der angefragten Funkzelle befindet bezogen auf die zukünftige Route, insbesondere unmittelbar vor der angefragten Funkzelle bezogen auf die zukünftige Route.

Nach einer Ausführungsform ist das Endgerät ein mobiles Endgerät, zum Beispiel ein Mobilfunktelefon, vorzugsweise ein Smartphone.

In einer anderen Ausführungsform ist das Endgerät im Fahrzeug eingebaut. Somit sind auch zum Beispiel Fahrzeug basierte Services oder Fahrzeug basierte Funktionen möglich, die eine Datenverbindung mit einer Cloudinfrastruktur über das Kommunikationsnetzwerk benötigen.

Wenn im Lichte dieser Beschreibung speziell von einem mobilen Endgerät geschrieben wird, so soll stets die allgemeinere Form des Endgeräts mitgelesen werden.

In einer Ausführungsform werden mehrere Funkzellen reserviert, die sich entlang der zukünftigen Route befinden. Das Prinzip der prädiktiven Funkzellenreservierung für eine Funkzelle wird also vorzugsweise auf mehrere Funkzellen erweitert.

Nach einer Ausführungsform ist vorgesehen, dass, wenn die Antwort umfasst, dass ein Einbuchen in die angefragte Zelle unmöglich ist, das Endgerät ansprechend auf die Antwort zukünftige erforderliche Daten über das Kommunikationsnetzwerk von einer Netzwerkserverinfrastruktur anfordert. Dadurch wird insbesondere der technische Vorteil bewirkt, dass sich das Endgerät unabhängig davon macht, dass ein Einbuchen in die angefragte Zelle nicht möglich ist. Denn es werden bereits jetzt die zukünftigen erforderlichen Daten angefordert. Ein solches Anfordern von zukünftigen erforderlichen Daten kann auch als ein sogenanntes "Prefetch" bezeichnet werden. Es werden also Daten angefordert, die zwar momentan noch nicht benötigt werden, von denen aber absehbar ist, dass sie zukünftig benötigt werden. Da aber ein Einbuchen in die angefragte Funkzelle nicht möglich ist, könnten diese Daten nicht angefragt oder angefordert werden, wenn sich das Endgerät, vorzugsweise das mobile Endgerät, innerhalb der Funkzelle befände. Erfindungsgemäß ist nun vorgesehen, dass diese Daten angefordert werden, bevor sich das Endgerät innerhalb der Funkzelle befindet.

Bei Daten im Sinne der vorliegenden Erfindung handelt es sich beispielsweise um Reibwertdaten, Daten zu temporären Gefahrenstellen entlang der Route, Daten zu Straßenzuständen der Route, Wetterdaten, insbesondere Witterungsdaten, also insbesondere allgemein Daten, die für eine Interpretation und eine Bewertung eines Umfeldmodells, welches einem Umfeld des Fahrzeugs entspricht, verwendet werden können. Dies also bevor Eingriffe in eine Fahrdynamikregelung des Fahrzeugs vorgenommen werden. Daten umfassen beispielsweise Navigationsdaten und/oder Verkehrsdaten.

Die angeforderten zukünftigen Daten werden dann insbesondere vom Endgerät mittels der Kommunikationsschnittstelle empfangen und insbesondere nach einer Ausführungsform zwischengespeichert, beispielsweise in einen Speicher, insbesondere im Fahrzeug, zwischengespeichert oder gespeichert. Dies insbesondere so lange, bis eine Datenkommunikation, insbesondere mit der Netzwerkserverinfrastruktur, wieder möglich ist. Ein solcher Speicher kann auch als ein Datenakku bezeichnet werden.

Eine Netzwerkserverinfrastruktur im Sinne der vorliegenden Erfindung umfasst beispielsweise einen oder mehrere Netzwerkserver. Insbesondere ist die Netzwerkserverinfrastruktur als eine Cloud-Infrastruktur, insbesondere als eine Datencloud, gebildet.

In einer anderen Ausführungsform ist vorgesehen, dass das Endgerät entlang der Route bewegt wird (zum Beispiel mittels des Fahrzeugs, weil es zum Beispiel im Fahrzeug eingebaut ist) und während der Bewegung von einer Funkzelle zu einer nächsten Funkzelle wechselt, wobei die Funkzelle der Reservierungsanfrage derjenigen Funkzelle entspricht, die der Funkzelle unmittelbar folgt, in welcher sich das Endgerät momentan befindet.

Dadurch wird insbesondere der technische Vorteil bewirkt, dass ein unterbrechungsfreies sogenanntes Mobile-Cell-Hopping möglich ist. Die Formulierung "Mobile Cell Hopping" ist der englischsprachige Begriff für das Wechseln von einer Funkzelle zur nächsten Funkzelle, wenn sich das Endgerät bewegt oder bewegt wird.

Nach einer Ausführungsform wird die zukünftige Route mittels eines Navigationssystems bereitgestellt. Das heißt also insbesondere, dass die Funkzelle, die der momentanen Funkzelle unmittelbar folgt, in welcher sich das Endgerät momentan befindet, basierend auf den mittels des Navigationssystems bereitgestellten Routendaten, die der Route entsprechen, ermittelt werden kann.

Nach einer anderen Ausführungsform ist vorgesehen, dass die Reservierungsanfrage eine Zeit umfasst, wann sich das Endgerät in die Funkzelle einbuchen möchte. Dadurch wird insbesondere der technische Vorteil bewirkt, dass die Funkzelle nur für eine bestimmte Zeit für das Endgerät reserviert werden muss. Eine optimale Auslastung der Funkzelle ist somit in vorteilhafter Weise ermöglicht.

Nach einer Ausführungsform ist vorgesehen, dass die Antwort umfasst, für welchen Zeitraum die angefragte Funkzelle für das Endgerät zum Einbuchen reserviert ist. Dadurch ist insbesondere der technische Vorteil bewirkt, dass das Endgerät Kenntnis darüber erlangt, für welchen Zeitraum die angefragte Zelle für das Endgerät zum Einbuchen reserviert ist. Somit wird es in vorteilhafter Weise in die Lage versetzt, abzuschätzen, ob es die angefragte Funkzelle noch rechtzeitig erreichen wird. Es ist insbesondere vorgesehen, dass die Reservierung bei Bedarf entsprechend angepasst wird. Das heißt also, dass das Endgerät eine neue Reservierungsanfrage an den Funkzellenverwaltungsserver senden kann, wenn das Endgerät nicht mehr rechtzeitig, also für den Zeitraum, die Funkzelle zwecks Einbuchen erreicht.

Bei dem mobilen Endgerät handelt es sich in einer Ausführungsform um ein Mobilfunktelefon, insbesondere um ein Smartphone.

Nach einer Ausführungsform ist das Kommunikationsnetzwerk ein Mobilfunknetzwerk, insbesondere ein 4G- oder ein 5G-Netzwerk.

Funktionalitäten des Endgeräts und des Funkzellenverwaltungsservers ergeben sich analog aus den Funktionalitäten der entsprechenden Verfahren und umgekehrt. Das heißt also insbesondere, dass sich Vorrichtungsmerkmale des Endgeräts und des Funkzellenverwaltungsservers analog aus den entsprechenden Verfahrensmerkmalen ergeben und umgekehrt.

Die Erfindung wird im Folgenden anhand von bevorzugten Ausführungsbeispielen näher erläutert. Hierbei zeigen
Fig. 1 ein Ablaufdiagramm eines Verfahrens zum Betreiben eines Endgeräts,
Fig. 2 ein Ablaufdiagramm eines Verfahrens zum Betreiben eines Funkzellenverwaltungsservers,
Fig. 3 ein Endgerät für ein Kommunikationsnetzwerk,
Fig. 4 ein Funkzellenverwaltungsserver und
Fig. 5 ein Fahrzeug.

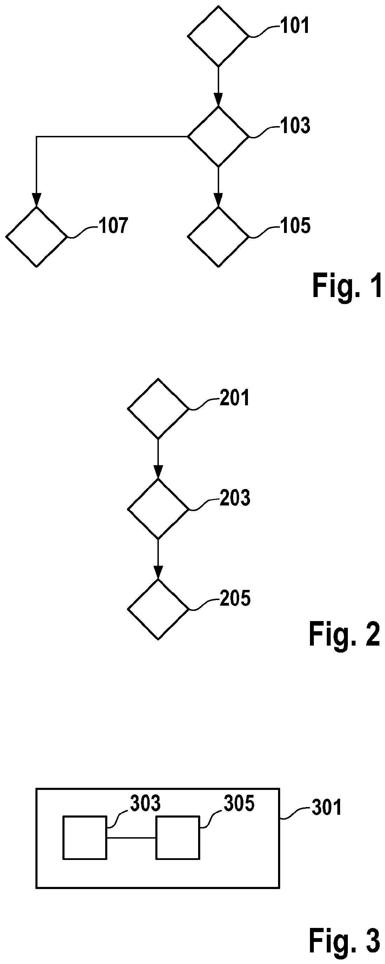

Fig. 1 zeigt ein Ablaufdiagramm eines Verfahrens zum Betreiben eines Endgeräts für ein Kommunikationsnetzwerk.

In einem Schritt 101 sendet das Endgerät, welches nach einer Ausführungsform ein mobiles Endgerät ist, basierend auf einer zukünftigen Route des Endgeräts eine Reservierungsanfrage zum Einbuchen in eine Funkzelle des Kommunikationsnetzwerks entlang der Route über das Kommunikationsnetzwerk an einen Funkzellenverwaltungsserver. In einem Schritt 103 empfängt das Endgerät eine Antwort des Funkzellenverwaltungsservers über das Kommunikationsnetzwerk. Wenn die Antwort umfasst, dass ein Einbuchen in die angefragte Zelle möglich ist, so bucht sich das Endgerät gemäß einem Schritt 105 in die angefragte Funkzelle ein. Dies dann, wenn sich das Endgerät in Funkreichweite oder innerhalb der Funkzelle befindet.

Wenn die Antwort umfasst, dass ein Einbuchen in die angefragte Zelle unmöglich ist, so fordert das Endgerät gemäß einem Schritt 107 ansprechend auf die Antwort zukünftige erforderliche Daten über das Kommunikationsnetzwerk von einer Netzwerkserverinfrastruktur an.

Fig. 2 zeigt ein Ablaufdiagramm eines Verfahrens zum Betreiben eines Funkzellenverwaltungsservers für Funkzellen eines Kommunikationsnetzwerks.

In einem Schritt 201 empfängt der Funkzellenverwaltungsserver über das Kommunikationsnetzwerk eine Reservierungsanfrage zum Einbuchen in eine Funkzelle von einem Endgerät, das zum Beispiel ein mobiles Endgerät ist. Gemäß einem Schritt 203 überprüft der Funkzellenverwaltungsserver, ob entsprechend der Reservierungsanfrage ein Einbuchen in die Funkzelle seitens des Endgeräts möglich ist oder nicht. In einem Schritt 205 sendet der Funkzellenserver abhängig von der Prüfung eine entsprechende Antwort über das Kommunikationsnetzwerk an das Endgerät, dass ein Einbuchen in die angefragte Funkzelle möglich oder nicht möglich, also unmöglich, ist.

Fig. 3 zeigt ein Endgerät 301 für ein Kommunikationsnetzwerk.

Das Endgerät 301 umfasst einen Prozessor 303, der ausgebildet ist, basierend auf einer zukünftigen Route des Endgeräts 301 eine Reservierungsanfrage zum Einbuchen in eine Funkzelle des Kommunikationsnetzwerks entlang der Route zu ermitteln. Das Endgerät 301 umfasst ferner eine Kommunikationsschnittstelle 305, die ausgebildet ist, die Reservierungsanfrage an einen Funkzellenverwaltungsserver über das Kommunikationsnetzwerk zu senden, sodass sich das Endgerät 301 abhängig von einer Antwort des Funkzellenverwaltungsservers in die angefragte Funkzelle einbuchen kann (und dies auch tut, wenn die Antwort positiv ist, also die Funkzelle reserviert ist). Die Kommunikationsschnittstelle ist also insbesondere ausgebildet, eine entsprechende Antwort des Funkzellenverwaltungsservers über das Kommunikationsnetzwerk zu empfangen. Eine negative Antwort heißt, dass kein Einbuchen möglich ist, die Funkzelle nicht reserviert wurde. Bei einer negativen Antwort ist dann insbesondere vorgesehen, dass zukünftige erforderliche Daten angefordert werden (pre-fetch).

Das Endgerät 301 ist beispielsweise ein mobiles Endgerät. Das Endgerät ist beispielsweise in einem Fahrzeug eingebaut.

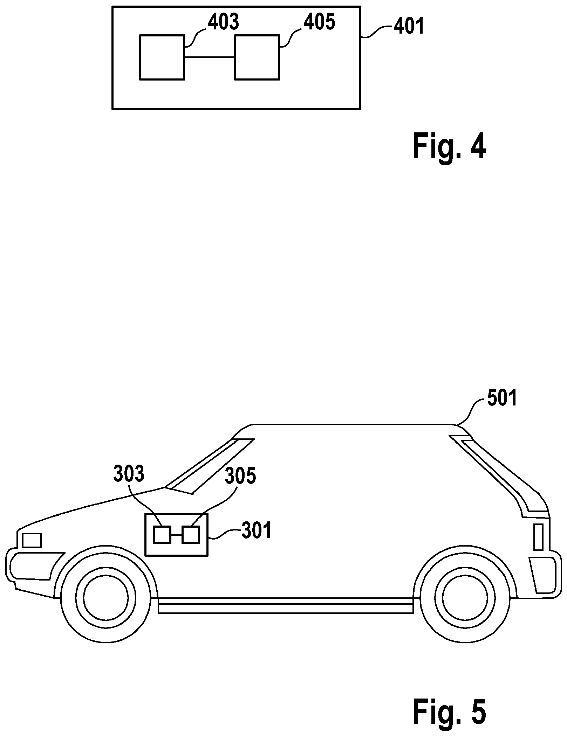

Fig. 4 zeigt einen Funkzellenverwaltungsserver 401 für Funkzellen eines Kommunikationsnetzwerks.

Der Funkzellenverwaltungsserver 401 umfasst eine Kommunikationsschnittstelle 403, die ausgebildet ist, eine Reservierungsanfrage zum Einbuchen in eine Funkzelle über das Kommunikationsnetzwerk von einem Endgerät zu empfangen. Der Funkzellenverwaltungsserver 401 umfasst ferner einen Prozessor 405, der ausgebildet ist, zu überprüfen, ob entsprechend der Reservierungsanfrage ein Einbuchen in die Funkzelle seitens des Endgeräts möglich ist oder nicht, wobei der Prozessor 405 ferner ausgebildet ist, abhängig von der Prüfung eine entsprechende Antwort zu ermitteln, dass ein Einbuchen in die angefragte Funkzelle möglich oder nicht möglich, also unmöglich, ist. Die Kommunikationsschnittstelle 403 ist ausgebildet, die Antwort über das Kommunikationsnetzwerk an das Endgerät zu senden.

Fig. 5 zeigt ein Fahrzeug 501, welches das Endgerät 301 der Fig. 3 umfasst. Zum Beispiel ist das Endgerät 301 im Fahrzeug eingebaut. Zum Beispiel ist das Endgerät 301 ein mobiles Endgerät, welches im Fahrzeug eingebaut ist.

Die erfindungsgemäße Idee beruht also insbesondere auf einer prädiktiven Funkzellenreservierung entlang einer Route, insbesondere einer Fahrtroute des Fahrzeugs, um so in vorteilhafter Weise eine Verfügbarkeit der Kommunikationsschnittstelle sicherzustellen. Falls eine Reservierung nicht möglich ist, so ist erfindungsgemäß vorgesehen, dass ein Prefetch der erforderlichen zukünftigen Daten erfolgt, was eine Datenverfügbarkeit und eine Datenkonsistenz sicherstellen kann.

Die Erfindung ist besonders vorteilhaft bei 5G-Mobilfunknetzwerken einsetzbar, was nach einer Ausführungsform so vorgesehen ist, also die Verwendung in einem 5G-Mobilfunknetzwerk.

Ein 5G-Mobilfunknetzwerk umfasst beispielsweise ein Spektrum von 300 MHz bis 300 GHz, was insbesondere flexibel genutzt werden kann. Zum Vergleich nutzt ein LTE-Mobilfunknetzwerk zumindest in Deutschland drei fixe Frequenzblöcke bei 800 MHz, 1800 MHz und 2600 MHz. Die restlichen 297 GHz sind zurzeit für den terrestrischen Mobilfunk noch gar nicht aktiviert.

Eine Route des Endgeräts, insbesondere eine Fahrtroute des Fahrzeugs umfassend das Engerät, ist vorzugsweise durch mehrere Funkzellen abgedeckt. Das heißt also, dass sich entlang der Route, insbesondere der Fahrtroute, mehrere Funkzellen befinden. Dies insbesondere auch dann, wenn es sich bei dem Kommunikationsnetzwerk um ein 3G- oder 4G-Mobilfunknetzwerk handelt. Wenn sich beispielsweise die Funkzellen im Abstand von beispielsweise kleiner als 50 m befinden, so befindet sich das Fahrzeug bei einer Fahrt mit 100 km/h weniger als 60 s in einer Funkzelle. In dieser Zeit erfolgen die für das Mobile Cell Hopping notwendigen Schritte: ein Verbindungsaufbau umfassend einen Handshake, eine Datenübertragung und einen Verbindungsabbau aus der Funkzelle.

Damit ein solches Mobile Cell Hopping unterbrechungsfrei funktionieren kann, ist erfindungsgemäß vorgesehen, dass die nächste anzufahrende Funkzelle reserviert, insbesondere für das Fahrzeug umfassend das Engerät reserviert, wird. Dies insbesondere mittels einer Routenplanung, die beispielsweise mittels eines Navigationssystems durchgeführt wird. Das heißt also, dass sich die nächste anzufahrende Funkzelle aus der geplanten Route, insbesondere der geplanten Fahrtroute, ergibt. Erfindungsgemäß ist vorgesehen, dass eine Reservierungsanfrage vom Endgerät, also insbesondere vom Fahrzeug umfassend das Engerät, an den Funkzellenverwaltungsserver, der Teil einer Mobilfunkinfrastruktur eines Mobilfunkbetreibers sein kann, gesendet wird. Der Funkzellenverwaltungsserver prüft die Reservierung und belegt oder reserviert die Zelle, also die Funkzelle, für das Endgerät, also insbesondere für das Fahrzeug, vorzugsweise in einem bestimmten Zeitabschnitt oder Zeitraum. Das heißt also insbesondere, dass der Funkzellenverwaltungsserver die Funkzelle für das Endgerät, insbesondere für das Fahrzeug, reserviert oder belegt, dies insbesondere für einen bestimmten Zeitabschnitt oder Zeitraum. Natürlich ist es vorzugsweise vorgesehen, dass sich trotz Belegung oder Reservierung noch weitere Endgeräte, zum Beispiel mobile Endgeräte, einbuchen können, solange eine maximale Belegungskapazität nicht überschritten wird. Das heißt, dass nach einer Ausführungsform die Funkzelle nicht nur ausschließlich für das anfragende Endgerät reserviert wird.

Wenn diese prädiktive Funkzellenreservierung nicht möglich ist, da beispielsweise die Funkzelle bereits voll belegt ist, wird dies mittels einer entsprechenden Antwort dem Endgerät, insbesondere dem Fahrzeug, mitgeteilt. Ansprechend auf den Empfang dieser Antwort sendet dann das Endgerät eine Anforderung oder eine Anfrage an eine Netzwerkserverinfrastruktur, um von dieser zukünftige erforderliche Daten zu erhalten. Das Endgerät fordert also von der Netzwerkserverinfrastruktur zukünftige erforderliche Daten an. Dies kann auch als ein Prefetch bezeichnet werden.

Die angeforderten zukünftigen Daten werden dann insbesondere vom Endgerät mittels der Kommunikationsschnittstelle empfangen und insbesondere nach einer Ausführungsform zwischengespeichert, beispielsweise in einen Speicher, insbesondere im Fahrzeug zwischengespeichert. Dies insbesondere so lange, bis eine Datenkommunikation, insbesondere mit der Netzwerkserverinfrastruktur, wieder möglich ist. Ein solcher Speicher kann auch als ein Datenakku bezeichnet werden.

Zusammenfassend stellt die Erfindung also ein Konzept einer prädiktiven Reservierung von Funkzellen, insbesondere Mobilfunkzellen, zur unterbrechungsfreien Kommunikation mit einer Datencloud (allgemein mit einer Netzwerkserverinfrastruktur) zur Verfügung.

## Patentansprüche

1. Verfahren zum Betreiben eines Endgeräts (301) für ein Kommunikationsnetzwerk, wobei das Endgerät basierend auf einer zukünftigen Route des Endgeräts (301) eine Reservierungsanfrage zum Einbuchen in eine Funkzelle des Kommunikationsnetzwerks entlang der Route über das Kommunikationsnetzwerk an einen Funkzellenverwaltungsserver (401) sendet (101), um sich dann abhängig von einer Antwort des Funkzellenverwaltungsservers (401) in die angefragte Funkzelle einbuchen (105) zu können, **dadurch gekennzeichnet, dass** die Reservierungsanfrage eine Zeit umfasst, wann sich das Endgerät (301) in die Funkzelle einbuchen möchte.

2. Verfahren nach Anspruch 1, wobei, wenn die Antwort umfasst, dass ein Einbuchen in die angefragte Zelle unmöglich ist, das Endgerät (301) ansprechend auf die Antwort zukünftige erforderliche Daten über das Kommunikationsnetzwerk von einer Netzwerkserverinfrastruktur anfordert (107).

3. Verfahren nach Anspruch 1 oder 2, wobei das Endgerät (301) entlang der Route bewegt wird und während der Bewegung von einer Funkzelle zu einer nächsten Funkzelle wechselt, wobei die Funkzelle der Reservierungsanfrage derjenigen Funkzelle entspricht, die der Funkzelle unmittelbar folgt, in welcher sich das Endgerät (301) momentan befindet.

4. Verfahren zum Betreiben eines Funkzellenverwaltungsservers (401) für Funkzellen eines Kommunikationsnetzwerks, wobei der Funkzellenverwaltungsserver (401) über das Kommunikationsnetzwerk eine Reservierungsanfrage zum Einbuchen in eine Funkzelle von einem Endgerät (301) empfängt (201), wobei der Funkzellenverwaltungsserver (401) überprüft (203), ob entsprechend der Reservierungsanfrage ein Einbuchen in die Funkzelle möglich ist oder nicht, wobei der Funkzellenserver abhängig von der Prüfung eine entsprechende Antwort über das Kommunikationsnetzwerk an das Endgerät (301) sendet (205), dass ein Einbuchen in die angefragte Funkzelle möglich oder nicht möglich ist, **dadurch gekennzeichnet, dass** die Antwort umfasst, für welchen Zeitraum die angefragte Funkzelle für das Endgerät (301) zum Einbuchen reserviert ist.

5. Endgerät (301) für ein Kommunikationsnetzwerk, umfassend einen Prozessor (303), der ausgebildet ist, basierend auf einer zukünftigen Route des mobilen Endgeräts (301) eine Reservierungsanfrage zum Einbuchen in eine Funkzelle des Kommunikationsnetzwerks entlang der Route zu ermitteln, und eine Kommunikationsschnittstelle (305), die ausgebildet ist, die Reservierungsanfrage an einen Funkzellenverwaltungsserver (401) über das Kommunikationsnetzwerk zu senden, so dass sich das Endgerät (301) abhängig von einer Antwort des Funkzellenverwaltungsservers (401) in die angefragte Funkzelle einbuchen kann, **dadurch gekennzeichnet, dass** die Reservierungsanfrage eine Zeit umfasst, wann sich das Endgerät (301) in die Funkzelle einbuchen möchte.

6. Funkzellenverwaltungsserver für Funkzellen eines Kommunikationsnetzwerks, umfassend eine Kommunikationsschnittstelle (403), die ausgebildet ist, eine Reservierungsanfrage zum Einbuchen in eine Funkzelle über das Kommunikationsnetzwerk von einem Endgerät (301) zu empfangen, und einen Prozessor (405), der ausgebildet ist, zu überprüfen, ob entsprechend der Reservierungsanfrage ein Einbuchen in die Funkzelle möglich ist oder nicht, wobei der Prozessor (405) ferner ausgebildet ist, abhängig von der Prüfung eine entsprechende Antwort zu ermitteln, dass ein Einbuchen in die angefragte Funkzelle möglich oder nicht möglich ist, wobei die Kommunikationsschnittstelle (403) ferner ausgebildet ist, die Antwort über das Kommunikationsnetzwerk an das Endgerät (301) zu senden, **dadurch gekennzeichnet, dass** die Antwort umfasst, für welchen Zeitraum die angefragte Funkzelle für das Endgerät (301) zum Einbuchen reserviert ist.

7. Fahrzeug (501), umfassend das Endgerät (301) nach Anspruch 5.

8. Computerprogramm, umfassend Programmcode zur Durchführung des Verfahrens nach einem der Ansprüche 1 bis 4, wenn das Computerprogramm auf einem Computer ausgeführt wird.

## Claims

1. Method for operating a terminal (301) for a communication network, wherein the terminal takes a future route of the terminal (301) as a basis for sending (101) a reservation request for registering in a radio cell of the communication network along the route to a radio cell management server (401) via the communication network, so as then to be able, depending on a response from the radio cell management server (401), to register (105) in the requested radio cell, **characterized in that** the reservation request comprises a time when the terminal (301) wishes to register in the radio cell.

2. Method according to Claim 1, wherein if the response comprises registration in the requested cell being impossible, the terminal (301) reacts to the response by requesting (107) future required data from a network server infrastructure via the communication network.

3. Method according to Claim 1 or 2, wherein the terminal (301) is moved along the route and, during the movement, changes from one radio cell to the next radio cell, the radio cell of the reservation request corresponding to that radio cell that immediately follows the radio cell that the terminal (301) is currently in.

4. Method for operating a radio cell management server (401) for radio cells of a communication network, wherein the radio cell management server (401) receives (201) via the communication network a reservation request for registering in a radio cell from a terminal (301), wherein the radio cell management server (401) checks (203) whether or not registration in the radio cell is possible according to the reservation request, the radio cell server sending (205) an appropriate response to the terminal (301) via the communication network indicating that registration in the requested radio cell is possible or not possible, depending on the check, **characterized in that** the response comprises the period for which the requested radio cell is reserved for the terminal (301) for registration.

5. Terminal (301) for a communication network, comprising a processor (303) designed to take a future route of the mobile terminal (301) as a basis for ascertaining a reservation request for registering in a radio cell of the communication network along the route, and a communication interface (305) designed to send the reservation request to a radio cell management server (401) via the communication network, so that the terminal (301) is able, depending on a response from the radio cell management server (401), to register in the requested radio cell, **characterized in that** the reservation request comprises a time when the terminal (301) wishes to register in the radio cell.

6. Radio cell management server for radio cells of a communication network, comprising a communication interface (403) designed to receive a reservation request for registering in a radio cell from a terminal (301) via the communication network, and a processor (405) designed to check whether or not registration in radio cell is possible according to the reservation request, wherein the processor (405) is further designed to ascertain an appropriate response indicating that registration in the requested radio cell is possible or not possible, depending on the check, wherein the communication interface (403) is further designed to send the response to the terminal (301) via the communication network, **characterized in that** the response comprises a period for which the requested radio cell is reserved for the terminal (301) for registration.

7. Vehicle (501), comprising the terminal (301) according to Claim 5.

8. Computer program, comprising program code for performing the method according to one of Claims 1 to 4 when the computer program is executed on a computer.

## Revendications

1. Procédé pour faire fonctionner un terminal (301) pour un réseau de communication, dans lequel le terminal, en se basant sur un futur trajet du terminal (301), envoie (101) à un serveur (401) de gestion de cellules radio par l'intermédiaire du réseau de communications une demande de réservation pour se connecter dans une cellule radio du réseau de communication le long du trajet, afin qu'il puisse ensuite se connecter (105) dans la cellule radio demandée en fonction d'une réponse du serveur (401) de gestion de cellules radio, **caractérisé en ce que** la demande de réservation comprend un instant où le terminal (301) souhaite se connecter dans la cellule radio.

2. Procédé selon la revendication 1, dans lequel, lorsque la réponse comprend le fait qu'une connexion est impossible dans la cellule demandée, le terminal (301) demande (107) à une infrastructure de serveur de réseau, conformément à la réponse, de futures données requises par l'intermédiaire du réseau de communication.

3. Procédé selon la revendication 1 ou 2, dans lequel le terminal (301) est déplacé le long du trajet et passe d'une cellule radio à une cellule radio suivante pendant le déplacement, dans lequel la cellule radio correspond à la demande de réservation de la cellule radio qui suit immédiatement la cellule radio dans laquelle se trouve actuellement le terminal (301).

4. Procédé pour faire fonctionner un serveur de gestion de cellules radio (401) pour des cellules radio d'un réseau de communication, dans lequel le serveur de gestion de cellules radio (401) reçoit (201) en provenance d'un terminal (301) par l'intermédiaire du réseau de communication une demande de réservation pour se connecter dans une cellule radio, dans lequel le serveur de gestion de cellules radio (401) vérifie (203) si une connexion dans la cellule radio est ou non possible conformément à la demande de réservation, dans lequel le serveur de cellules radio envoie (205), en fonction de la vérification, une réponse correspondante au terminal (301) par l'intermédiaire du réseau de communication, qui indique qu'une connexion dans la cellule radio demandée est possible ou n'est pas possible, **caractérisé en ce que** la réponse comprend la période de temps pendant laquelle la cellule radio demandée est réservée au terminal (301) pour la connexion.

5. Terminal (301) pour un réseau de communication comprenant un processeur (303) conçu pour déterminer une demande de réservation pour se connecter, en se basant sur un futur trajet du terminal mobile (301), dans une cellule radio du réseau de communication le long du trajet, et une interface de communication (305) conçue pour envoyer la demande de réservation à un serveur de gestion de cellules radio (401) par l'intermédiaire du réseau de communication afin que le terminal (301) puisse se connecter dans la cellule radio requise en fonction d'une réponse du serveur de gestion de cellules radio (401), **caractérisé en ce que** la demande de réservation comprend un instant où le terminal (301) souhaite se connecter dans la cellule radio.

6. Serveur de gestion de cellules radio pour des cellules radio d'un réseau de communication, comprenant une interface de communication (403) conçue pour recevoir en provenance d'un terminal (301) par l'intermédiaire du réseau de communication une demande de réservation pour se connecter à une cellule radio, et un processeur (405) configuré pour vérifier si une connexion dans la cellule radio est ou non possible conformément à la demande de réservation, dans lequel le processeur (405) est en outre conçu pour déterminer, en fonction de la vérification, une réponse correspondante selon laquelle la connexion dans la cellule radio demandée est possible ou n'est pas possible, dans lequel l'interface de communication (403) est en outre conçue pour envoyer la réponse au terminal (301) par l'intermédiaire du réseau de communication, **caractérisé en ce que** la réponse comprend la période de temps pendant laquelle la cellule radio demandée est réservée au terminal (301) pour la connexion.

7. Véhicule (501) comprenant le terminal (301) selon la revendication 5.

8. Programme d'ordinateur comprenant un code de programme permettant de mettre en oeuvre le procédé selon l'une quelconque des revendications 1 à 4 lorsque le programme d'ordinateur est exécuté sur un ordinateur.
